# EUROPÄISCHE PATENTSCHRIFT

(11) **EP 1 213 921 B1**
(45) Veröffentlichungstag und Bekanntmachung des Hinweises auf die Patenterteilung: **05.07.2017**
(21) Anmeldenummer: 01128439.5
(22) Anmeldetag: 05.12.2001
(51) Int. Cl.: H04N 5/782, H04N 5/761

(54) **Verfahren und Vorrichtung zur Fernprogrammierung eines Aufzeichnungsgeräts**
Recording apparatus remote programming procedure and arrangement
Procédé et dispositif de programmation à distance d'un appareil d'enregistrement

(30) Priorität: 09.12.2000 DE 10061452
(43) Veröffentlichungstag der Anmeldung: 12.06.2002
(73) Patentinhaber: Grundig Multimedia AG, 6362 Stansstad (CH)
(72) Erfinder: Braig, Rudolf, 90471 Nürnberg (DE); Silverberg, Michael, 90471 Nürnberg (DE)
(74) Vertreter: Louis Pöhlau Lohrentz

(56) Entgegenhaltungen:
- EP-A- 1 058 428
- WO-A-96/13933

## Beschreibung

Die Erfindung betrifft ein Verfahren und eine Vorrichtung zur Fernprogrammierung eines Aufzeichnungsgerätes. Weiterhin betrifft die Erfindung ein Aufzeichnungsgerät zur Verwendung bei einem Verfahren zur Fernprogrammierung eines Aufzeichnungsgerätes.

Es ist bereits bekannt, Aufzeichnungsgeräte unter Verwendung der Bedientastatur des jeweiligen Aufzeichnungsgerätes zur Aufzeichnung eines gewünschten Fernsehrundfunkbeitrages zu programmieren. Im Rahmen dieser Aufzeichnungsprogrammierung werden dem jeweiligen Fernsehrundfunkbeitrag zugehörige Aufzeichnungsdaten in einem Programmwunschspeicher des Aufzeichnungsgerätes abgespeichert. Zu den Aufzeichnungsdaten gehören beispielsweise Informationen über den Sendetag, die Anfangszeit der gewünschten Sendung, deren Dauer, die jeweilige Sendeanstalt und gegebenenfalls die Stationstastennummer desjenigen Kanals, in welchem die gewünschte Sendung übertragen wird.

Weiterhin ist es bereits bekannt, eine derartige Aufzeichnungsprogrammierung unter Verwendung von Teletext-Programmvorschauseiten durchzuführen. Bei diesem bekannten Verfahren erfolgt mittels der Bedientastatur des Aufzeichnungsgerätes eine Anwahl derjenigen Teletextseite, auf welcher die Aufzeichnungsdaten der jeweils gewünschten Sendung enthalten sind. Auf dieser Teletextseite wird dann mittels eines Cursors die gewünschte Sendung markiert. Anschließend wird eine Bestätigungstaste gedrückt. Als Folge davon werden die zur gewünschten Sendung gehörigen Aufzeichnungsdaten der Teletextseite entnommen und in den Programmwunschspeicher des Aufzeichnungsgerätes übertragen.

Aus EP 1 058 428 A1 ist ein System für die Fernsteuerung mit einer Netzwerkdurchschaltvermittlungsstelle für Multiprotokollumwandlung bekannt. Das Informationsaustauschsystem weist eine Mehrzahl von Steuerpunkten und eine Mehrzahl von Nutzeranschlüssen auf, wobei das System in der Lage ist, Nachrichten von den Fernbenutzeranschlüssen an die Steuerpunkte und von dort an weitere Fernanschlüsse mit einem Standardprotokoll zu übersenden. Diese Signale dienen dazu, um ein Gerät, vorzugsweise einem Videorecorder, zu steuern.

Der Erfindung liegt die Aufgabe zugrunde, einen Weg aufzuzeigen, wie die Programmiermöglichkeiten eines Aufzeichnungsgerätes erweitert werden können.

Diese Aufgabe wird durch ein Verfahren mit den im Anspruch 1 angegebenen Merkmalen gelöst. Vorteilhafte Ausgestaltungen und Weiterbildungen der Erfindung sind in den abhängigen Ansprüchen 2 bis 4 angegeben. Die Ansprüche 5 bis 9 betreffen eine Vorrichtung zur Fernprogrammierung eines Aufzeichnungsgerätes. Gegenstand des Anspruchs 10 ist ein Aufzeichnungsgerät zur Verwendung bei einem Verfahren nach einem oder mehreren der Ansprüche 1 bis 4.

Die Vorteile der Erfindung bestehen insbesondere darin, dass das Aufzeichnungsgerät, bei welchem es sich beispielsweise um einen Videokassettenrecorder oder um einen Hard-Disc-Recorder handeln kann, auch aus der Ferne programmiert werden kann. Dies geschieht mittels einer SMS-Sendeeinheit, bei welcher es sich um ein Handy oder um einen Computer handeln kann, beispielsweise ein Laptop. Da der Prozentsatz der Bevölkerung, welcher ohnehin ein Handy und/oder einen Laptop hat, ständig größer wird, ist der zur Realisierung der Erfindung zu treibenden Aufwand gering. Es muss lediglich dem Aufzeichnungsgerät ein SMS-Empfänger beigestellt oder in dieses integriert werden, um die per SMS-Nachricht übertragenen Aufzeichnungsdaten in den Programmwunschspeicher des Aufzeichnungsgerätes übernehmen zu können. Die Erstellung und Versendung einer derartigen SMS-Nachricht ist insbesondere für die heutige jüngere Generation problemlos. Die SMS-Empfangseinheit braucht lediglich zum Empfang von SMS-Nachrichten einsetzbar zu sein. Die Fähigkeit, auch Telefonanrufe entgegennehmen oder abgeben zu können, ist nicht notwendig.

Folglich ist das beanspruchte Verfahren sehr preisgünstig realisierbar. Dies gilt erst recht dann, wenn die vom SMS-Sender ausgestrahlten SMS-Telegramme im SMS-Server zwischengespeichert und von dort aus zyklisch abgefragt bzw. abgerufen werden. In diesem Fall verbraucht die SMS-Empfangseinheit nicht ständig Energie, sondern lediglich zu den genannten Abfragen.

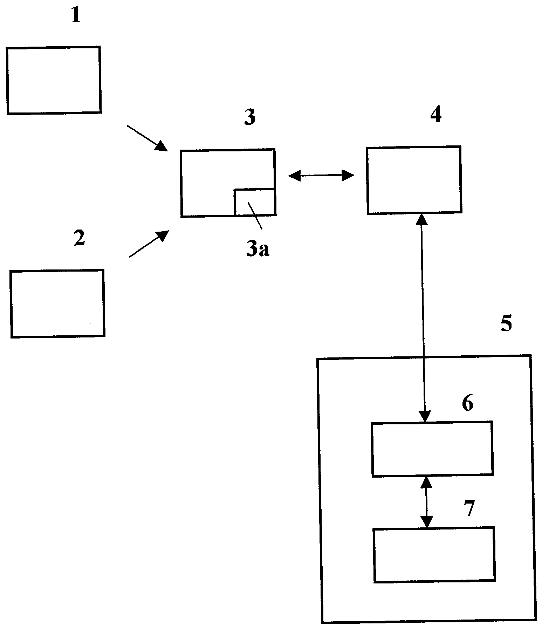

Weitere vorteilhafte Eigenschaften der Erfindung ergeben sich aus der Erläuterung eines Ausführungsbeispiels anhand der Figur. Diese zeigt ein Blockschaltbild mit den zum Verständnis der Erfindung notwendigen Baugruppen einer Vorrichtung zur Fernprogrammierung eines Aufzeichnungsgerätes.

Die dargestellte Vorrichtung weist SMS-Sender 1 und 2 auf. Mittels jedes dieser Sender 1 und 2 kann eine SMS-Nachricht erzeugt und an einen SMS-Server 3 abgestrahlt werden. Die Erzeugung der SMS-Nachricht erfolgt unter Verwendung der Bedientastatur des SMS-Senders 1 bzw. 2. Die SMS-Nachricht enthält die Aufzeichnungsdaten eines gewünschten Rundfunk-Sendebeitrages, beispielsweise dessen Sendetag, die Anfangszeit, die Dauer der Sendung, eine Bezeichnung der Sendeanstalt und die Nummer der Stationstaste des Aufzeichnungsgerätes, unter welcher die aufzuzeichnende Wunschsendung empfangen werden kann. Sind alle diese Daten mittels der Tastatur des SMS-Senders 1 bzw. 2 eingegeben, dann kann die die Aufzeichnungsdaten enthaltende SMS-Nachricht vom SMS-Sender an den SMS-Server 3 abgestrahlt und in dessen Zwischenspeicher 3a übernommen werden.

Beim SMS-Sender 1 handelt es sich um ein Handy, welches zur Versendung von SMS-Nachrichten geeignet ist.

Der SMS-Sender 2 ist Bestandteil eines Personal-Computers, beispielsweise eines Laptops. Bei diesem geschieht die Eingabe der Aufzeichnungsdaten unter Verwendung einer vorgegebenen Internetseite, die mittels der Tastatur des Personal-Computers angewählt wurde und die auf dem Bildschirm des Personal-Computers dargestellt wird. Sind die Aufzeichnungsdaten der aufzuzeichnenden Sendung eingegeben, dann werden sie in Form einer SMS-Nachricht vom SMS-Sender 2 an den SMS-Server 3 ausgestrahlt und dort im Zwischenspeicher 3a abgespeichert.

Empfangsseitig ist ein SMS-Empfänger 4 angeordnet, welcher entweder integrierter Bestandteil des Aufzeichnungsgerätes 5 ist oder welcher dem Aufzeichnungsgerät 5 beigestellt ist. Das Aufzeichnungsgerät 5 weist eine als Mikrocomputer realisierte Steuereinheit 6 und einen Programmwunschspeicher 7 auf. Die Steuereinheit 6 des Aufzeichnungsgerätes 5 aktiviert den SMS-Empfänger 4 zyklisch zur Aussendung eines Abruf- bzw. Abfragesignals an den SMS-Server 3. Mittels dieses Abrufsignals wird regelmäßig - beispielsweise in zeitlichen Abständen von jeweils einer Stunde - überprüft, ob dem Aufzeichnungsgerät 5 zugehörige Aufzeichnungsdaten im Zwischenspeicher 3a des SMS-Servers abgespeichert sind oder nicht. Ist dies nicht der Fall, dann wird der SMS-Empfänger von der Steuereinheit wieder deaktiviert. Sind hingegen im Zwischenspeicher 3a des SMS-Servers 3 dem Aufzeichnungsgerät 5 zugehörige Aufzeichnungsdaten abgespeichert, dann werden diese als Reaktion auf das Abrufsignal an den SMS-Empfänger 4 übertragen und von dort aus über die Steuereinheit 6 in den Programmwunschspeicher 7 des Aufzeichnungsgerätes übertragen.

Die beschriebene Empfangsanordnung ist energiesparend aufgebaut, da die Steuereinheit 6 den SMS-Empfänger nur zyklisch für eine kurze Zeitdauer aktiviert. Diese kurze Zeitdauer muss lediglich dazu ausreichen, ein Abfragesignal an den SMS-Server 3 auszusenden und dann gegebenenfalls die dort zwischengespeicherten und vom SMS-Server 3 wieder ausgestrahlten Aufzeichnungsdaten zu empfangen.

Weiterhin muss es sich bei der SMS-Empfangseinheit 4 nicht um ein komplettes Handy oder einen kompletten Personalcomputer handeln, sondern lediglich um ein Bauteil, welches Abfragesignale an den SMS-Server 3 aussenden kann und welches Aufzeichnungsdaten von dort empfangen kann.

Die Übertragung der SMS-Nachricht vom SMS-Sender 1, 2 an den SMS-Server 3 und von diesem aus an den SMS-Empfänger 4 erfolgt - wie es bei SMS-Nachrichten allgemein üblich ist - jeweils unter Verwendung einer dem SMS-Empfänger 4 zugeordneten individuellen Telefonnummer.

## Patentansprüche

1. Verfahren zur Fernprogrammierung eines Aufzeichnungsgerätes, bei welchem einem aufzuzeichnenden Rundfunksendebeitrag zugehörige Aufzeichnungsdaten mittels einer SMS-Sendeeinheit (1, 2) generiert, von der SMS-Sendeeinheit zu einem SMS-Server (3) übertragen, vom SMS-Server zu einer SMS-Empfangseinheit (4) übertragen, von der SMS-Empfangseinheit in einen Programmwunschspeicher (7) des Aufzeichnungsgerätes (5) übertragen und im Programmwunschspeicher (7) abgespeichert werden, wobei die von der SMS-Sendeeinheit (1, 2) zum SMS-Server (3) übertragenen Aufzeichnungsdaten in einem Speicher (3a) des SMS-Servers (3) zwischengespeichert werden,
**dadurch gekennzeichnet, dass**
die im SMS-Server (3) zwischengespeicherten Aufzeichnungsdaten auf Abruf zur SMS-Empfangseinheit (4) übertragen werden, wobei die SMS-Empfangseinheit (4) zyklisch zur Aussendung von Abrufsignalen aktiviert wird.

2. Verfahren nach Anspruch 1,
**dadurch gekennzeichnet, dass**
die SMS-Empfangseinheit (4) von der Steuereinheit (6) des Aufzeichnungsgerätes (5) zyklisch zur Aussendung von Abrufsignalen aktiviert wird und/oder die Aussendung von Abrufsignalen zyklisch in Zeitabständen von einer Stunde erfolgt.

3. Verfahren nach einem der Ansprüche 1 oder 2,
**dadurch gekennzeichnet, dass**
die dem aufzuzeichnenden Rundfunksendebeitrag zugehörigen Aufzeichnungsdaten unter Verwendung einer Internetseite eingegeben werden.

4. Verfahren nach einem der vorhergehenden Ansprüche,
**dadurch gekennzeichnet, dass**
die dem aufzuzeichnenden Rundfunksendebeitrag zugehörigen Aufzeichnungsdaten unter Verwendung eines Handys eingegeben werden.

5. Vorrichtung zur Fernprogrammierung eines Aufzeichnungsgerätes, mit
- einer SMS-Sendeeinheit (1,2),
- einem SMS-Server (3),
- einer SMS-Empfangseinheit (4) und
- einem mit der SMS-Empfangseinheit verbundenen, einen Programmwunschspeicher (7) aufweisenden Aufzeichnungsgerät (5)
**dadurch gekennzeichnet, dass**
das Aufzeichnungsgerät (5) eine Steuereinheit (6) aufweist, die die SMS-Empfangseinheit (4) zur zyklischen Aussendung von Abrufsignalen an den SMS-Server (3) aktiviert.

6. Vorrichtung nach Anspruch 5,
**dadurch gekennzeichnet, dass**
die SMS-Sendeeinheit Bestandteil eines Computers ist oder die SMS-Sendeeinheit ein Handy ist.

7. Vorrichtung nach Anspruch 5 oder 6,
**dadurch gekennzeichnet, dass**
die SMS-Sendeeinheit Empfangsmittel zum Empfang von Internetseiten und Eingabemittel zur Eingabe von einem aufzuzeichnenden Rundfunksendebeitrag zugehörigen Aufzeichnungsdaten unter Verwendung einer empfangenen Internetseite aufweist.

8. Vorrichtung nach einem der Ansprüche 5 bis 7,
**dadurch gekennzeichnet, dass**
der SMS-Server (3) einen Speicher (3a) zur Zwischenspeicherung von einem aufzuzeichnenden Rundfunksendebeitrag zugehörigen Aufzeichnungsdaten aufweist.

9. Vorrichtung nach einem der Ansprüche 5 bis 8,
**dadurch gekennzeichnet, dass**
und/oder die SMS-Empfangseinheit integrierter Bestandteil des Aufzeichnungsgerätes ist.

10. Aufzeichnungsgerät mit integrierter oder zugeordneter SMS-Empfangseinheit zur Verwendung bei einem Verfahren nach einem oder mehreren der Ansprüche 1 bis 4.

## Claims

1. Method for remote programming of a recording device, in which recording data belonging to a broadcasting transmission to be recorded is generated by means of an SMS transmission unit (1, 2), transferred from the SMS transmission unit to an SMS server (3), transferred from the SMS server to an SMS receiving unit (4), transferred from the SMS receiving unit to a requested programme memory (7) of the recording device (5) and stored in the requested programme memory (7), wherein the recording data transferred from the SMS transmission unit (1, 2) to the SMS server (3) is cached in a memory (3a) of the SMS server (3),
**characterised in that**
the recording data cached in the SMS server (3) is transferred on demand to the SMS receiving unit (4), wherein the SMS receiving unit (4) is activated cyclically for broadcasting polling signals.

2. Method according to claim 1,
**characterised in that**
the SMS receiving unit (4) is cyclically activated by the control unit (6) of the recording device (5) for broadcasting polling signals and/or broadcasting polling signals takes place cyclically at time intervals of one hour.

3. Method according to one of claims 1 or 2,
**characterised in that**
the recording data belonging to the broadcasting transmission to be recorded is entered by using an internet page.

4. Method according to one of the preceding claims,
**characterised in that**
the recording data belonging to the broadcasting transmission to be recorded is entered by using a mobile phone.

5. Device for remote programming of a recording device, having
- an SMS transmission unit (1, 2),
- an SMS server (3),
- an SMS receiving unit (4) and
- a recording device (5) that is connected to the SMS receiving unit and has a requested programme memory (7),
**characterised in that**
the recording device (5) has a control unit (6) that activates the SMS receiving unit (4) for cyclically broadcasting polling signals to the SMS server (3).

6. Device according to claim 5,
**characterised in that**
the SMS transmission unit is a component of a computer or the SMS transmission unit is a mobile phone.

7. Device according to claim 5 or 6,
**characterised in that**
the SMS transmission unit has receiving means for receiving internet pages and input means for inputting recording data belonging to the broadcasting transmission to be recorded by using a received internet page.

8. Device according to one of claims 5 to 7,
**characterised in that**
the SMS server (3) has a memory (3a) for caching recording data belonging to a broadcasting transmission to be recorded.

9. Device according to one of claims 5 to 8,
**characterised in that**
and/or the SMS receiving unit is an integrated component of the recording device.

10. Recording device having an integrated or allocated SMS receiving unit for use in a method according to one or more of claims 1 to 4.

## Revendications

1. Procédé de programmation à distance d'un appareil d'enregistrement, dans lequel des données d'enregistrement correspondant à un apport d'émission radio sont générées au moyen d'une unité d'émission de SMS (1, 2), transmises par l'unité d'émission de SMS à un serveur de SMS (3), transmises du serveur de SMS à une unité de réception de SMS (4), transmises de l'unité de réception de SMS à une mémoire de souhaits de programmation (7) de l'appareil d'enregistrement (5) et enregistrées dans la mémoire de souhaits de programmation (7), les données d'enregistrement transmises par l'unité d'émission de SMS (1, 2) vers le serveur de SMS (3) étant stockées dans une mémoire (3a) du serveur de SMS (3),
**caractérisé en ce que**
les données d'enregistrement stockées dans le serveur de SMS (3) sont transmises sur demande à l'unité de réception de SMS (4), l'unité de réception de SMS (4) étant activée de manière cyclique pour l'émission de signaux d'appel.

2. Procédé selon la revendication 1,
**caractérisé en ce que**
l'unité de réception de SMS (4) est activée par l'unité de commande (6) de l'appareil d'enregistrement (5) de manière cyclique pour l'émission de signaux d'appel et/ou l'émission de signaux d'appel a lieu de manière cyclique à des intervalles de temps d'une heure.

3. Procédé selon la revendication 1 ou 2,
**caractérisé en ce que**
les données d'enregistrement correspondant à l'apport d'émission radio à enregistrer sont entrées à l'aide d'une page Internet.

4. Procédé selon l'une des revendications précédentes,
**caractérisé en ce que**
les données d'enregistrement correspondant à l'apport d'émission radio à enregistrer sont entrées à l'aide d'un téléphone portable.

5. Dispositif pour la programmation à distance d'un appareil d'enregistrement avec :
- une unité d'émission de SMS (1, 2),
- un serveur de SMS (3),
- une unité de réception de SMS (4) et
- un appareil d'enregistrement (5), relié avec l'unité de réception de SMS et comprenant une mémoire de souhait de programmation (7),
**caractérisé en ce que**
l'appareil d'enregistrement (5) comprend une unité de commande (6) qui active l'unité de réception de SMS (4) pour l'émission cyclique de signaux d'appel au serveur de SMS (3).

6. Dispositif selon la revendication 5,
**caractérisé en ce que**
l'unité de réception de SMS fait partie d'un ordinateur ou l'unité d'émission de SMS est un téléphone portable.

7. Dispositif selon la revendication 5 ou 6,
**caractérisé en ce que**
l'unité d'émission de SMS comprend des moyens de réception pour la réception de pages internet et des moyens d'entrée pour l'entrée de données d'enregistrement correspondant à un apport d'émission radio à enregistrer, à l'aide d'une page Internet reçue.

8. Dispositif selon l'une des revendications 5 à 7,
**caractérisé en ce que**
le serveur de SMS (3) comprend une mémoire (3a) pour le stockage de données d'enregistrement correspondant à un apport d'émission radio à enregistrer.

9. Dispositif selon l'une des revendications 5 à 8,
**caractérisé en ce que**
et/ou l'unité de réception de SMS fait partie intégrante de l'appareil d'enregistrement.

10. Appareil d'enregistrement avec unité de réception de SMS intégrée ou correspondante pour l'utilisation dans un procédé selon l'une ou plusieurs des revendications 1 à 4.
